(19) Europäisches Patentamt
European Patent Office
Office européen des brevets

(11) EP 0 386 791 B1

(12) **EUROPEAN PATENT SPECIFICATION**

(45) Date of publication and mention
of the grant of the patent:
**05.06.1996 Bulletin 1996/23**

(51) Int Cl.6: **G05B 19/23**, G05B 19/18

(21) Application number: **90104559.1**

(22) Date of filing: **09.03.1990**

(54) **Apparatus for and method of controlling positioning of movable member**

Verfahren und Einrichtung zur Steuerung der Position eines bewegbaren Teils

Dispositif et méthode de commande du positionnement d'un membre mobile

(84) Designated Contracting States:
**DE SE**

(30) Priority: **10.03.1989 JP 56252/89**

(43) Date of publication of application:
**12.09.1990 Bulletin 1990/37**

(73) Proprietors:
• **HITACHI, LTD.
Chiyoda-ku, Tokyo 101 (JP)**
• **HITACHI KEIYO ENGINEERING CO., LTD.
Narashino-shi Chiba-ken (JP)**

(72) Inventors:
• **Sarugaku, Shinichi, 42-20-217
Funabashi-shi (JP)**
• **Iguchi, Koji,
Funabashi-shi (JP)**

(74) Representative: **Patentanwälte
Beetz - Timpe - Siegfried Schmitt-Fumian - Mayr
Steinsdorfstrasse 10
80538 München (DE)**

(56) References cited:
**EP-A- 0 059 541        FR-A- 2 563 461**

## Description

The present invention relates to an apparatus for and a method of controlling positioning of a movable member according to the preambles of the independent claims. Such a method and such an apparatus are known from FR-2 563 461. In particular, the invention relates to an apparatus and a method suitable for an automatic welding robot.

An industrial robot, in which a movable member can be moved into an arbitrary direction and positioned at an arbitrary position by using a plurality of actuators which are electrically controllable, is widely utilized in an automatic welding apparatus. In positioning control of the movable member such as a hand of the industrial robot, there is a problem in precision of the positioning control, as a matter of course. In addition, when the positioning control is applied to the automatic welding apparatus, there is another problem in displacement between a work (to be welded) and a welding torch supported by the hand of the robot. That is, even though the hand of the robot is positioned with high precision, good welding results cannot be obtained if the work is displaced from a designated position.

As one of examples to dissolve such problems, a proposal in JP-A-54-15441 is well known. In such a conventional technique as shown in JP-A-54-15441, a contact segment is supported by a movable member such as a hand of a robot. This contact segment is caused to contact with a work prior to a job such as a welding operation. The position of the work is detected by sensing the contact of the contact segment with the work and the correction is performed in the position control in accordance with the detected work position. In this example, a welding wire projected from a welding torch is used as the contact segment. While a predetermined voltage is applied between the welding wire and the work, the welding torch is moved in a direction at a predetermined speed. When the wire contacts with the work, a conductive path is formed between the welding wire and the work and current flows from the wire to the work. The position of the work is sensed from the position of the welding torch by sensing the current flowing through the welding wire.

In the above conventional technique, however, faster movement of the movable member is not taken account for in the sensing operation of the work position. Therefore, the sensing operation of the work position requires a long time, and hence a problem in lowering of the job speed occurs.

The problem in the conventional technique will be described below in detail.

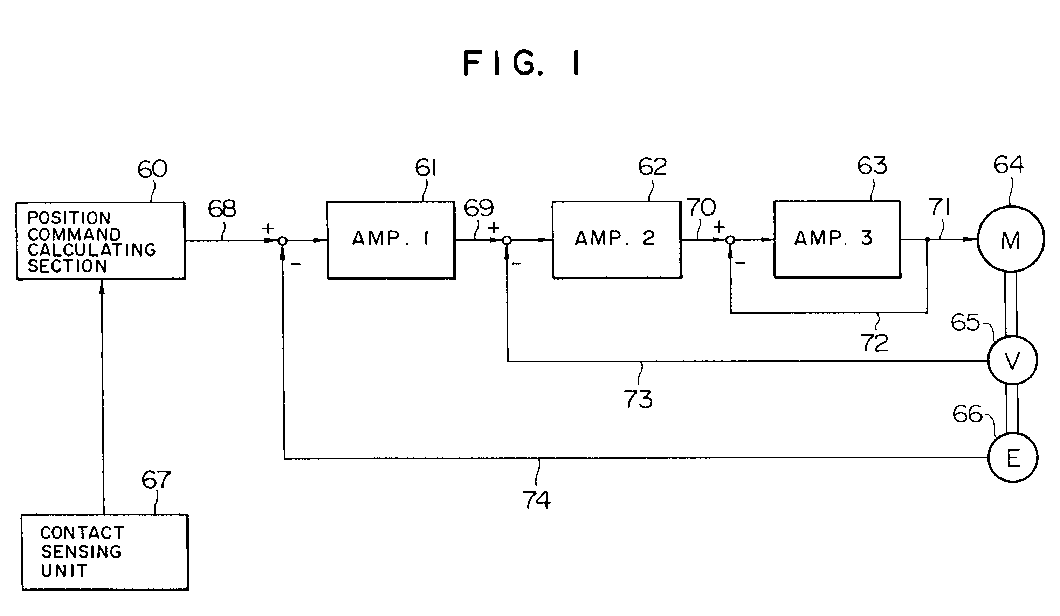

Fig. 1 is a block diagram showing an arrangement of a position control system usually used in a conventional automatic welding apparatus in which a robot is employed. In the figure, numeral 64 indicates a motor as an actuator for moving a hand of the robot. A position command calculating section 60 calculates a position of the hand to be moved in detection of the work position every predetermined period of time. Numeral 68 indicates a position command signal representing the position thus calculated. A signal representing difference in level between the position command signal 68 and a current position signal 74 sensed by a position sensor 66 is amplified by an amplifier 61 to obtain a speed command signal 69. Difference in level between the speed command signal 69 and a current speed signal 73 sensed by a speed sensor 65 is determined and an amplifier 62 amplifies a signal representing the difference to obtain an acceleration command signal 70.

Assuming that mass of the hand or the like moved by the motor 64 is not changed, the acceleration command signal 70 can be regarded as a torque command signal for the motor 64. As a result, the acceleration command signal 70 can be also regarded to be equal to a current command signal for the motor 64.

An amplifier 63 amplifies the acceleration command signal 70 to obtain a current signal 71 and the signal 71 is supplied to the motor 64 to move the hand. At this time, the amplifier 63 is subjected to a negative feed-back operation by a current feed-back signal 72 to have the predetermined precision.

A rotation speed and a rotation angle of the motor 64 are sensed by the speed sensor 65 and the position sensor 66, respectively. As described above, the rotation speed and the rotation angle are used to determine differences with values commanded by various control commands. Thus, the negative feed-back operation is applied to the positioning control, with the result that high precision control can be achieved.

Numeral 67 indicates a contact sensing unit using the contact segment as described above and a contact signal from the unit 67 is supplied to the position command calculating section 60.

In the above system, circuits from the amplifier 61 to the motor 64 are often constituted by analog circuits and independently provided for the robot for each control axis.

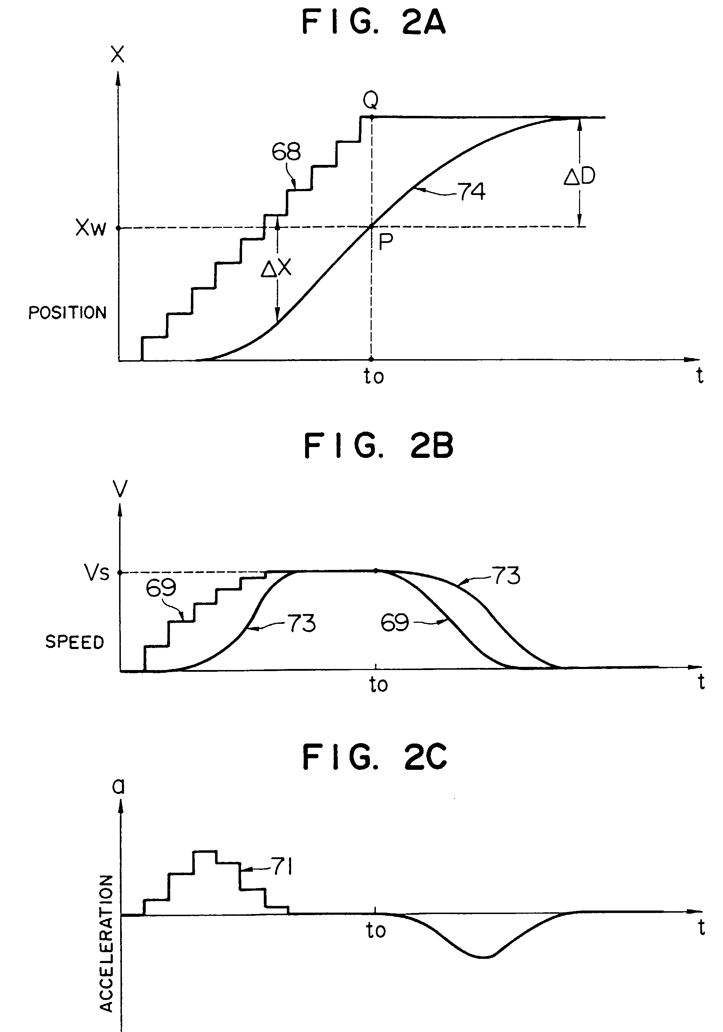

Figs. 2A, 2B and 2C are graphs showing operations upon sensing the position of the robot by the contact segment in the system shown in Fig. 1. Figs. 2A, 2B and 2C show changing states of a position X of the torch (hand), a speed value of the torch, and an acceleration (torque) value $\underline{a}$ of the torch, An axis of abscissa of each graph indicates time. Note that the position X in Fig. 2A is on a sensing path.

Assuming that the work as an object whose position is to be detected is on a position $X_w$ in Fig. 2A, the position command signal 68 is calculated in a step manner, as shown in the figure.

A displacement value $\Delta X$ between a position commanded by the position command signal 68 and an actual torch position represented by the current position signal 74 represents a speed command signal. Therefore, at this time, the speed command signal 69 is as shown in Fig. 2B. Further, the difference between a value commanded by the speed command signal 69 and an actual torch speed value represented by the current speed signal 73 represents a torque command signal. Therefore, the torque command signal 71 is as shown in Fig. 2C.

In this manner, the torch is moved at a predetermined speed (a sensing operation speed) and the wire contacts with the work to be welded at the position P. At this time $t_0$, the position commanded by the position command is Q and the commanded position Q is displaced from the position P by a displacement value $\Delta D$ proportional to the sensing operation speed $V_s$, as shown in Fig. 2A. For this reason, even if the position command is stopped at the time $t_0$ when the contact is sensed, the torch further moves from the current position P toward the position Q commanded by the position command, i.e., by the displacement value $\Delta D$ from the work position.

When the sensing operation speed is $V_s$, the displacement value $\Delta D$ can be expressed by the following equation:

$$V_s = G \cdot \Delta D$$

Therefore,

$$\Delta D = V_s/G$$

where G is called a loop gain and determined by gains of the amplifiers 61 to 63.

In a position sensing system using the contact segment, when the displacement value $\Delta D$ is great, the contact segment (the wire in this case) is bent. Therefore, the subsequent position sensing operation cannot be performed.

The loop gain G is determined by the characteristics of the automatic welding apparatus and it is well known that the vibration occurs and the stable positioning control cannot be performed, when the gain G is too great. Hence, the sensing operation speed $V_s$

$$\Delta K \geq \Delta D = V_s/G$$

Therefore,

$$V_s \leq G \cdot \Delta K$$

where $\Delta K$ is a maximum value, to which the torch can be inertially moved without plastic deformation of the wire, and is usually about 0.5 to 1 mm.

The loop gain is different for every apparatus. In order to obtain the loop gain of 20 in a large scale apparatus, more expensive motor is needed. Assuming that $\Delta k = 1$ mm and $G = 20$,

$$V_s \leq 20 \text{ mm/sec}$$

When the displacement value of the work is ±20 mm, the time necessary for the position sensing operation is more than 2 sec.

Information of the sensed position is one-dimensional in this position sensing system. Therefore, as required in a general automatic welding apparatus, in order to sense a three-dimensional position of the work to be welded, the position sensing operations must be performed in three directions, i.e., three times. If there are many welding positions, the position sensing operations must be performed by the number of welding positions. As a result, a lot of time is taken for the position sensing operation in the conventional technique, thereby resulting in lowering of the job speed.

Prior art document FR-2 563 461 discloses a control apparatus with a safety device for industrial robots. The apparatus comprises a circuit for detecting interferences. When this circuit outputs a signal indicating such an interference, the moving object is controlled to be accelerated in a direction opposite to the previous direction.

Prior art document EP-A-0 059 541 discloses a protective system for an automatic tool changing apparatus. The protective system prevents damage to a tool and a work or tool chaning mechanism component parts due to interferences between the tool and the work during the tool changing operation. The protective system monitors the load current of a driving motor for the automatic tool changing apparatus. When the load current reaches an abnormally high current value, the operation of the automatic tool changing apparatus is reversed and then stopped.

The object of the present invention is to provide a movable member positioning control method and apparatus, in which there is no possibility that a contact segment such as a wire is deformed even if the position sensing operation speed is increased, and in which the time required for the position sensing operation can be sufficiently decreased.

This object is solved in accordance with the features of the independent claims. Dependent claims are directed on preferred embodiments of the invention.

At the time when the contact of the wire with the work is sensed, an actuator for moving a movable member is controlled such that acceleration is applied to the movable member in a direction opposite to that of acceleration applied to the movable member before the contact is sensed.

When the contact is sensed, the acceleration is applied to the movable member in the direction opposite to the acceleration direction applied to the movable member before the contact is sensed. Therefore, force negating inertia force is operated to the movable member so that sufficient braking power can be applied to the movable member without providing a separate and independent braking unit. Therefore, the inertially moving distance of the movable member can be easily held within a predetermined distance even if the sensing speed is increased, and thereby the time required for the position sensing operation can be sufficiently shortened.

The present invention will be apparent from the following detailed description taken in conjunction with the accompanying drawings, in which:

Fig. 1 is a functional block diagram showing a control operation in a conventional example;

Figs. 2A, 2B and 2C are graphs for explaining the control operation in the conventional example;

Fig. 3 is a block diagram showing an arrangement of an embodiment when the present invention is applied to an industrial robot such as an automatic welding apparatus;

Fig. 4 is a circuit block diagram showing an arrangement of a movable member positioning control apparatus according to an embodiment of the present invention;

Fig. 5 is a block diagram of a sensor mechanism which can be applied to the movable member positioning control apparatus according to the present invention;

Fig. 6 is a diagram for explaining the position sensing operation;

Fig. 7 is a functional block diagram showing a control operation in the movable member positioning control apparatus according to the embodiment of the present invention;

Figs. 8A, 8B and 8C are graphs for explaining the control operation in the embodiment of the present invention; and

Figs. 9 to 12 are flow charts for explaining the control operation in the embodiment of the present invention.

An apparatus for and a method of controlling positioning of a movable member will be described in detail based on embodiments shown in accompanying drawings.

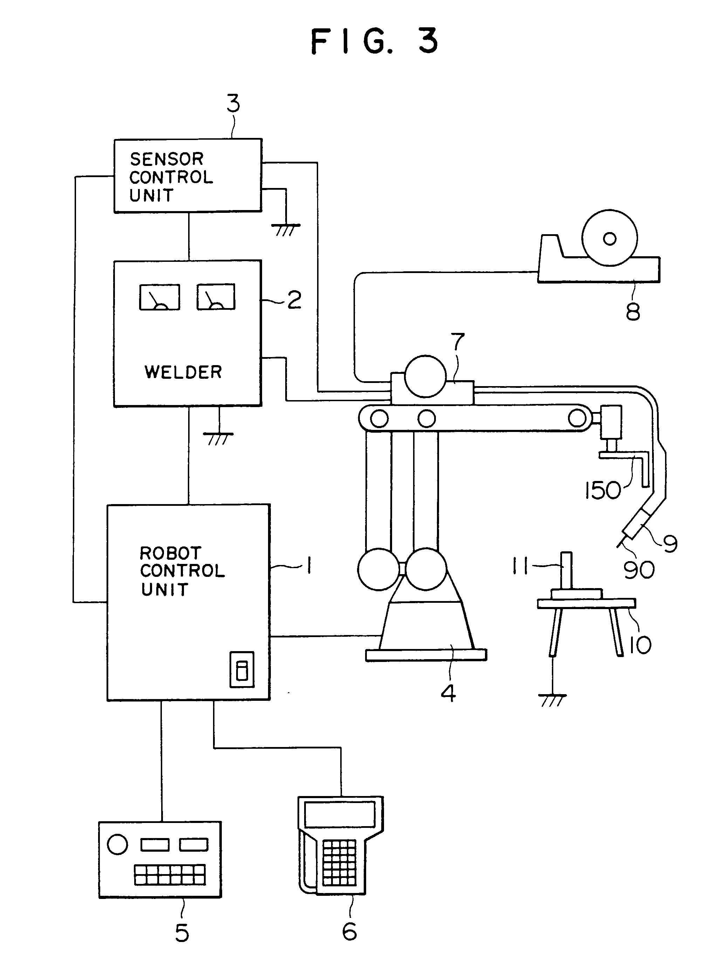

Fig. 3 is a block diagram showing an entire arrangement of an embodiment of an automatic welding apparatus as an industrial robot to which the present invention is applied. In the figure, a robot control unit 1 controls the entire apparatus. A welder 2 generates a current and a voltage for welding in response to a command from the unit 1. A sensor control unit 3 applies a high voltage to a welding wire in response to a command from the unit 1 and informs the unit 1 that the wire contacts with a work. A main body 4 of the robot is constituted to have six axes. Each axis is driven by a motor (an actuator) to which current is supplied from the unit 1. A rotation angle of each motor is sensed by an encoder and informed to the unit 1.

A robot operation box 5 is provided with a mode switch for switching a teaching mode and an execution mode, start and stop buttons for starting and stopping the robot, and the like. A robot teaching unit 6 is used for teaching the robot operations such as a position sensing operation and a welding operation. For this purpose, on the panel of the unit 6 are provided keys such as operation keys for manually moving each axis of the robot and a key for teaching a position of the robot.

A wire delivering unit 7 delivers the welding wire in response to a command from the welder 2. Numeral 8 indicates a wire supply unit. Numeral 9 indicates a welding torch 9 and the welding wire 90 is delivered from the tip of the torch 9. Numeral 150 indicates a hand for supporting the welding torch 9. Numeral 10 indicates a base which is connected to ground. Numeral 11 indicates the work as an object to be welded. The work is often located on the base 10 with a displacement from a designated position. Hence, in the embodiment, the displacement of the work 11 is sensed and a vertical plate is welded to a base plate in according to the displacement.

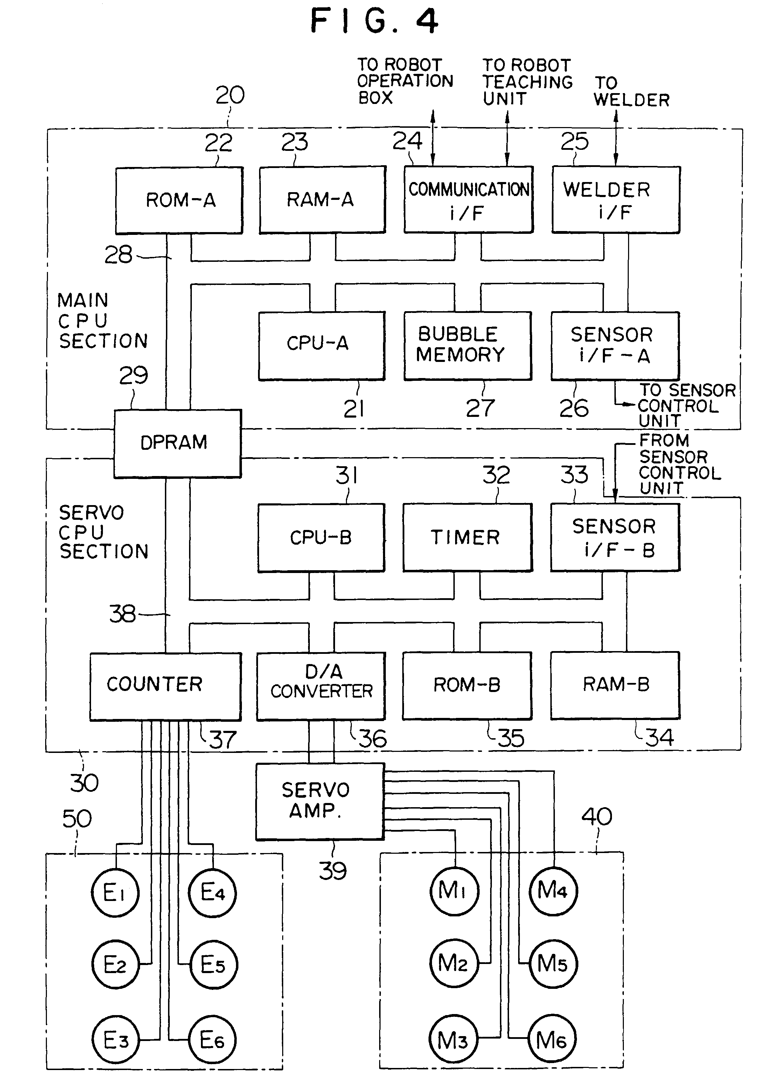

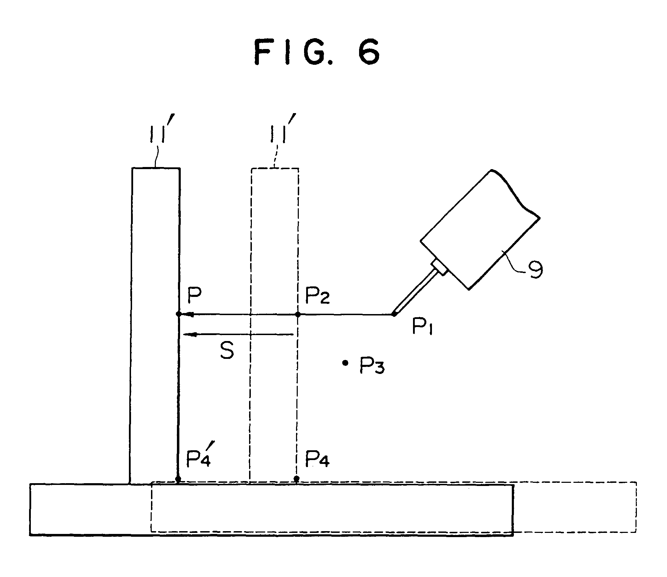

Fig. 4 is a block diagram showing inside hardware of the robot control unit 1. In Fig. 6, a main CPU section 20 controls periphery units and a sequence of operations of the entire apparatus. Values commanded by commands through a position command are calculated by the section 20 and the commands representing the values are generated. A CPU-A 21 performs control and operations in the section 20. An initial job program to be executed by the CPU-A 21 when the apparatus is turned on is stored in a ROM-A 22. Job programs transferred from a bulk memory 27 and intermediate results of calculations are stored in a RAM-A 23. A communication interface (i/F) 24 has communication ports of two channels, one of which is connected to the robot operation box 5, the other being connected to the robot teaching unit 6. The CPU-A 21 can input states of the keys or the pushed buttons of the unit 6 through the interface 24 and supply commands to each unit.

A welder interface (i/F) 25 interfaces an arc ON/OFF command, a voltage command upon an arc ON state, and a wire delivering speed command from the CPU-A 21 to the welder 2. Numeral 26 indicates a sensor interface-A (i/F-A), through which the CPU-A commands a contact sensing operation to the sensor control unit. The bubble memory 27 is non-volatile. Taught position information and many of programs to be executed by the CPU-A 21 are stored in the memory 27. When the apparatus is turned on, the stored information is transferred to the RAM-A 23 by execution of the initial program in the ROM-A 22 by the CPU-A 21. The CPU-A 21 exchanges data with each unit through a bus 28 in the main CPU section. A dual-port RAM (DPRAM) 29 can be accessed by the CPU-A 21 and a CPU-B (to be described later) and exchange of data between both CPUs is performed through the RAM 29.

A servo CPU section 30 receives a position command from the main CPU section 20, calculates values to be commanded by a speed command, a torque command, and the like, and outputs commands representing the values to a servo amplifier 39 (to be described later). The CPU-B 31 performs operations and controls the entire servo CPU section 30. A timer 32 generates an interrupt to the CPU-B 31 every period of time, which is predesignated by the CPU-B 31. A sensor interface-B (i/F-B) 33 receives from the sensor control unit 3 a signal representing whether or not the wire contacts with the work and transfers the signal to the CPU-B 31. A RAM-B 34 stores intermediate results of the operations by the CPU-B 31. A ROM-B 35 stores a program describing algorithm to be executed by the CPU-B 31. A D/A converter 36 receives a digital signal representing the torque command from the CPU-B 31 and converts it to an analog signal (voltage) to supply the converted analog signal to the servo amplifier 39. The D/A converter 36 can perform the conversion operations for six axes. A counter 37 counts pulses transmitted from an encoder section 50 for each axis to measure a current rotation angle value of the axis and outputs the current angle value to the CPU-B.

A motor section 40 as driving means is mounted on the robot main body 4. The motor section includes six motors (actuators) M1 to M6 for driving the six axes of rotation, above-elbow, below-elbow, bend, swing and twist operations. The encoder section 50, which is mounted on the robot main body 4, includes six encoders E1 to E6, each of which generates pulses in correspondence with a rotation angle value of a corresponding motor. Note that all the sections in Fig. 4 except for the motor section 40 and the encoder section 50 are included in the robot control unit 1.

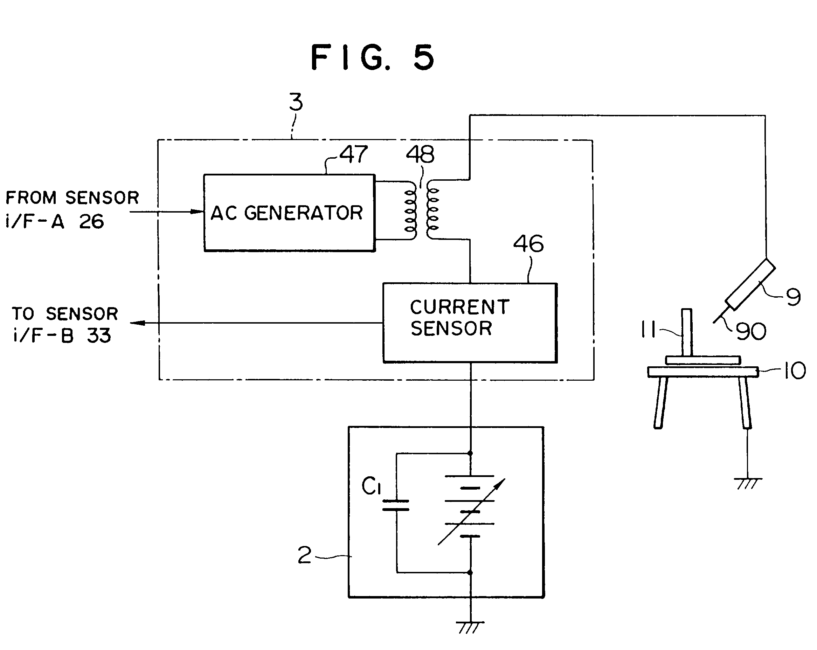

Next, a contact sensing operation of the sensor control unit 3 will be described below with reference to Fig. 5. An AC generator 47, a transformer 48, a current sensor 49 and the like are included in the sensor control unit 3. The contact sensing operation is performed as described below.

First, the AC generator 47 generates a high AC voltage in response to a contact sense start command signal received from the sensor interface-A 26 and the high voltage is supplied to a welding circuit through the transformer 48. When the wire 90 at the tip of the torch 9 contacts with the work 11, an AC closed loop is formed by the transformer 48, the wire 90 at the tip of the torch 9, the work 11, the work base 10, a bypass capacitor $C_1$ in the welder 2, and the current sensor 49 to flow an AC current in the loop. The AC current is sensed by the current sensor 49 and it is informed to the sensor interface-B 33 that the wire contacts with the work. Note that a value of the AC current is limited to a minimum value which is required to sense the contact without influence on the human body for the purpose of safety.

Next, an operation of the entire apparatus will be described below focusing on the CPU-A 21 with reference to Fig. 6.

First, the mode switch on the robot operation box 5 is operated to set the teaching mode. Each axis of the robot is moved by means of the teaching unit 6 such that the tip of the wire reaches a position $P_1$. Then, the teaching button is pushed so that the position $P_1$ is memorized in the robot. At the same time, it is input that the position $P_1$ is a sense start position. Subsequently, the robot is moved such that the wire tip reaches a position $P_2$ on the work 11 in the teaching mode and the position $P_2$ is taught as a sense position to the robot. Next, a refuge position $P_3$ and a welding start position $P_4$ are taught. Thereafter, welding positions and a welding end position (these are not shown) are sequentially taught.

Next, the mode switch is switched to set the execution mode. In the execution mode, the CPU-A 21 sequentially reads out the taught positions and job conditions, and outputs commands to the periphery units and position commands, for moving the robot to the positions, to the CPU-B 31 in accordance with the read out positions and conditions to perform the welding job. Note that the CPU-A 21 interpolates a path to a next position every predetermined time period to generate a position command, and outputs the position commands representing the interpolated path to the CPU-B 31.

Now, assume that the work is shifted from the position 11 shown by the broken line to location 11′ shown by the solid line in the execution mode.

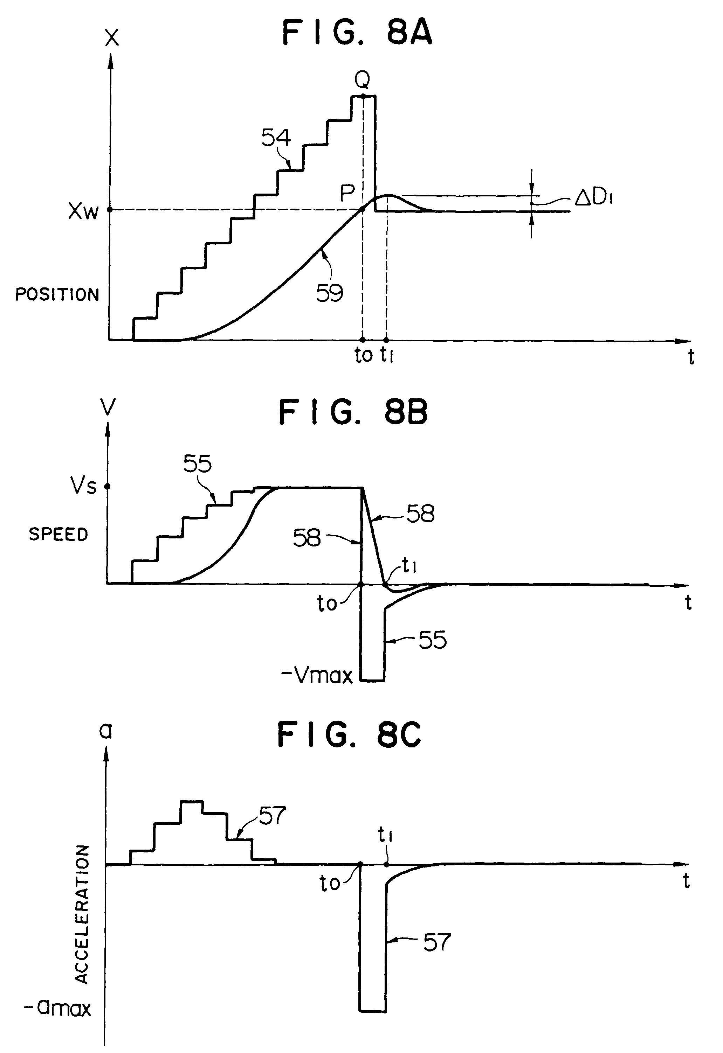

The CPU-A 21 moves the robot to the position $P_1$ while interpolates the path to the position $P_1$ as described above. Since the position $P_1$ is the sense start position, the CPU-A 21 outputs the contact sense start command to the sensor control unit 3. In addition, the CPU-A 21 commands the CPU-B 31 to be set in a contact monitoring state. Then, the CPU-A 21 moves the robot toward the position $P_2$ while interpolates the path to the work, until a contact signal is received from the CPU-B 31. When the contact signal is received from the CPU-B 31, the CPU-A 21 receives a current position value P from the CPU-B 31 and outputs the current position value P as the position command to the CPU-B 31 again. That is, if described with reference to Fig. 8A to be described in detail later, a position commanded by the position command is changed from a position Q to the position P.

The displacement value S between the taught position $P_2$ and the sensed position P is obtained from the following equation:

$$S = P - P_2$$

Next, the robot is moved to the refuge position $P_3$. When the robot is to be moved to the welding start position $P'_4$, the CPU-A 21 calculates a position $P'_4$ instead of the position $P_4$ from the following equation by using the displacement value S and interpolates the path to the position $P'_4$:

$$P'_4 = P_4 + S$$

Thus, the job is proceeded for the subsequent positions displaced by the displacement value S.

In this manner, the displacement value is sensed and the job is performed in accordance with the sensed displacement value.

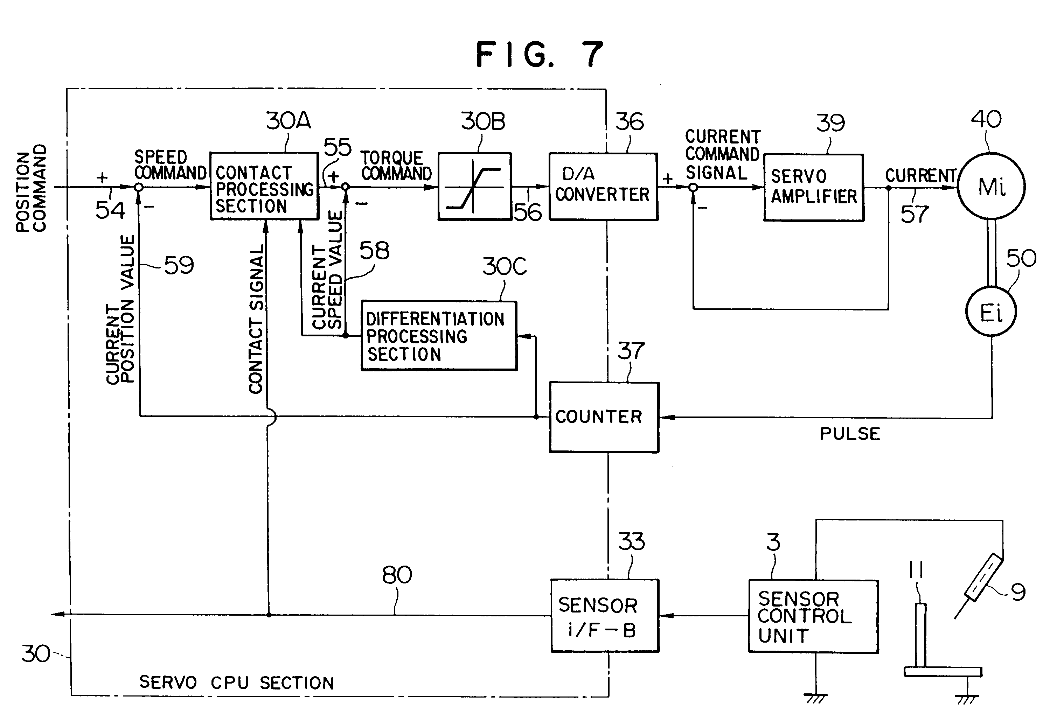

Next, the contact sensing operation (operation from the position $P_1$ to the position P) by the servo CPU section 30 as a main portion of the present invention will be described below, focusing on control of the CPU-B. Fig. 7 is a functional block diagram for explaining position control by the CPU-B 31.

First, a usual operation, i.e., an operation when the contact signal 80 is not generated from the sensor interface-B 33, will be described.

A value represented by a current position signal 59 from the counter 37 is subtracted from a value commanded by the position command 54 transmitted from the main CPU section 20 through the dual-port RAM 29 and the speed command is obtained as the subtracted result. A signal representing the speed command is supplied to a contact processing section 30A. When the contact signal 80 is not received, the section 30A outputs the received speed command signal with no correction as the speed command signal 55. A signal from the counter 37 representing the current position 59 is differentiated by a differentiation processing section 30C and a signal representing a current speed value 58 is obtained as a result of the differentiation of the signal.

The current speed value 58 is subtracted from a value commanded by the speed command 55 and a torque command representing the subtracted result is obtained. A signal representing the torque command is supplied to the D/A converter 36 through a limiter 30B and converted into a current command signal (an acceleration command signal) there. The current command signal is amplified by the servo amplifier 39 and a current signal 57 is obtained. The current signal is supplied to the motors Mi 40, which move the hand. At this time, the servo amplifier is subjected to a negative feed-back operation by a current feed-back signal in order to obtain desired precision.

Next, an operation when the contact of the wire with the work is sensed by the sensor control unit 3 and the contact signal 80 is generated will be described below.

When the contact signal 80 is received, the contact processing section 30A generates the speed command representing a maximum speed which can be provided by the section 30A in a direction opposite to that of the speed command supplied from the CPU-A. As a result, the torque command in the following stage has a very great value in a decelerating direction. For this reason, if the torque command is output to the servo amplifier and the motors without attenuation, there is the possibility that the amplifier and the motors are damaged. Therefore, a torque value commanded by the torque command is limited by the limiter 30B to a maximum value, up to which the motor can output, and the torque command signal representing the limited torque value is output to the servo amplifier 39.

The section 30A monitors the current speed value signal 58 supplied from the differentiation processing section 30C. When the value represented by the signal 58 is substantially equal to zero or it represents that the direction of the speed is opposite to that of the contact sensing operation, the section 30A stops outputting the speed command representing the maximum speed value. That is, the servo CPU section 30 outputs the torque command representing the maximum torque value in the decelerating direction for a period from the time when the contact signal is received to the time when the current speed value is substantially equal to zero or represents a direction opposite to the contact sensing direction.

The states of the above signals will be described below with reference to the Figs. 8A, 8B and 8C. Figs. 8A, 8B and 8C are graphs showing the position, the speed, and the acceleration, similar to Figs. 2A, 2B and 2C, respectively. Each horizontal axis indicates time. More specifically, Fig. 8A shows the position command signal 54 and the current position signal 59, Fig. 8B the speed command signal 55 and the current speed signal 58, and Fig. 8C the torque command signal 57.

Assuming that the work is at the position 11′ shown in Fig. 6 as a position $X_w$, the contact is sensed at the position P (at the time $t_0$). At this time, as shown in Fig. 8B, the speed command signal 55 is set to be $-V_{max}$ for a period from the time $t_0$ to the time $t_1$ by the contact processing section 30A. As a result, the torque command signal 57 is also set to be $-a_{max}$, as shown in Fig. 8C. In this manner, as shown in Fig. 8B, the current speed signal 58 is abruptly decelerated, compared to Figs. 2A, 2B and 2C. This decelerating state is kept until time $t_1$ when the current speed signal becomes substantially zero. The position command is negated for a period from the time $t_0$ to time $t_1$ but the main CPU section 20 has output the second position $X_w$ as the position command until time $t_1$.

Thus, in the embodiment, the control can be performed such that the robot inertially moves only the short distance $\Delta D_1$, as shown in Fig. 8A.

Next, let's calculate the sensing speed $V_s$. In the control system in which the loop gain G is about 20, acceleration of about 0.5g can be generally generated. Therefore, this acceleration is used as a condition.

$$\Delta K \geq \Delta D_1 = (1/2) \, ( V_s^2 \, /a)$$

Therefore

$$V_s \leq \sqrt{2a \cdot \Delta K}$$

As described above, if it is assumed that $\Delta K = 1$ mm and $a = 0.5g = 0.5 \times 9800$ mm/sec,

$$V_s \leq 99.0 \text{ mm/sec}$$

Therefore, in this case, the contact sensing operation can be performed five times as fast as in a conventional technique. As a result, the sensing time is only about 1/5, thereby resulting in remarkable decrease of the job time.

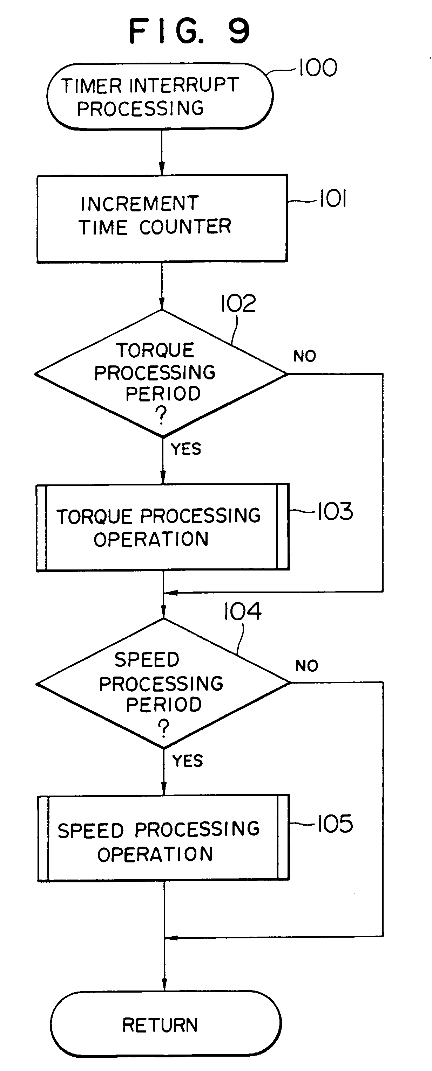

Next, the control by the CPU-B 31 will be described below in detail. Fig. 9 is a flow chart showing a timer interrupt processing operation 100. The processing is performed in response to an interrupt which is generated every predetermined period of time by the timer 32.

In step 101, a time counter is incremented by "1". In step 102, a count of the time counter is checked to see if it indicates a torque processing period. When it indicates the torque processing period, the torque processing operation is performed in step 103.

In step 104, similarly, the count is checked to see if it indicates a speed processing period. When it indicates the speed processing period, the speed processing operation is performed in step 105. The torque period is shorter than the speed period.

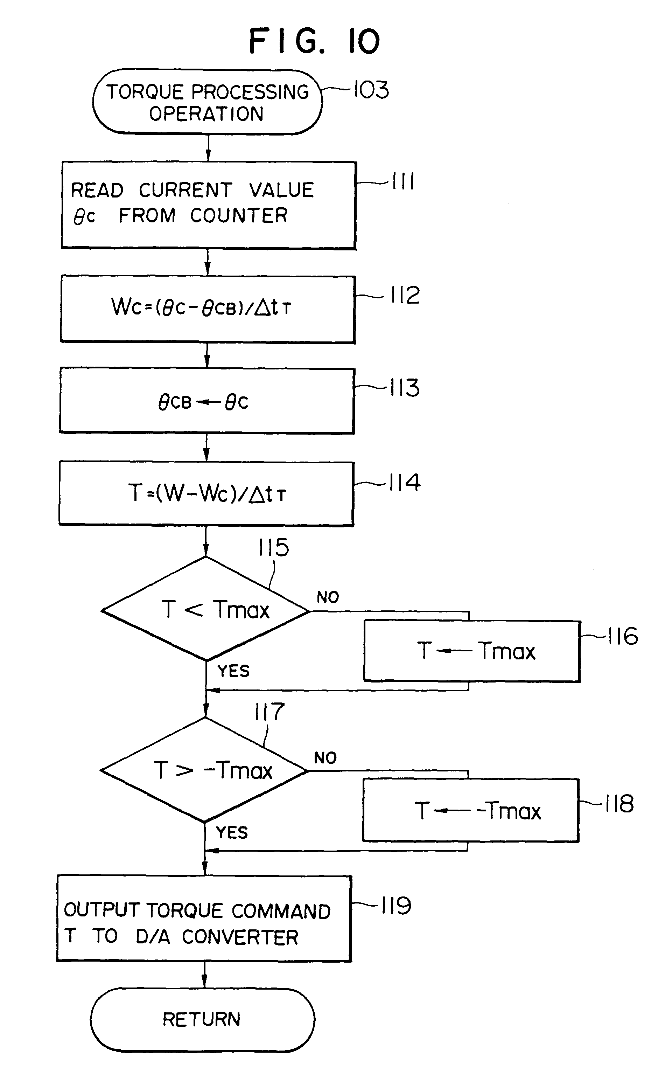

Fig. 10 shows the torque processing operation 103 in detail. In step 111, a current value $\theta_C$ is first read into the counter 37. The current value $\theta_C$ is a 6-dimensional vector value and has current values of the axes as components,

$$\theta_C = (\theta_{1C}, \theta_{2C}, \theta_{3C}, \theta_{4C}, \theta_{5C}, \theta_{6C})$$

In step 112, a differential value i.e., a difference value because digital processing is performed in the embodiment, is calculated. This step corresponds to the operation of the differentiation processing section 30C in Fig. 7. Data $\theta_{CB}$ is the current value in a previous cycle and operation is performed with respect to each of the axes 1 to 6. If not described particularly, the operation is performed with respect to each axis.

In step 113, the current value $\theta_C$ is written into the previous cycle current value $\theta_{CB}$. In step 114, a value commanded by the torque command is calculated. W and $W_C$ are values represented by the speed command and the current speed (signals 55 and 58 in Fig. 7), respectively, and $\Delta t_T$ is a scholar value and represents the torque processing period.

In steps 115 to 118, a limiter processing operation corresponding to the operation of the limiter 30B is performed. Data $T_{MAX}$ is a maximum allowable torque value. In step 115, this value is compared with a value commanded by the torque command T. The comparison operation is performed for each torque component. When at least one of the torque components exceeds the value $T_{MAX}$, an operation of step 116 is performed. The operation in step 116 has been described simply. However, actually, the following calculations are performed:

$$\vec{T} = (T_1, T_2, T_3, T_4, T_5, T_6) \tag{1}$$

$$T_X = \max (T_i) \ (i = 1 \text{ to } 6) \tag{2}$$

$$\vec{T} = (T_{MAXX}/T_X) \cdot \vec{T} \tag{3}$$

where $T_{MAXX}$ is a maximum torque value of the X-th axis and $T_X$ is a maximum value among the torque components. Equation (2) is for determining the maximum value $T_X$. In calculation of step 116, all the torque components are reduced at the same ratio such that the maximum value of a component falls within the predetermined maximum torque value.

In the following step 117, the operation similar to that in step 115 is performed. That is, a checking operation for a minimum torque value is performed, and when any one of the components is smaller than $-T_{MAX}$, the flow advances to step 118. The operation in step 118 is similar to that in step 116 and performed as follows:

$$T_X = \min (T_i) \ (i = 1 \text{ to } 6) \tag{4}$$

$$T = -(T_{MAXX}/T_X)T \tag{5}$$

This limiter processing operation can prevent an excessively high torque command from being generated so that the motors and the robot are damaged.

In step 119, the torque command is output to the D/A converter 36. Thus, each motor generates a torque value in correspondence with the command value T.

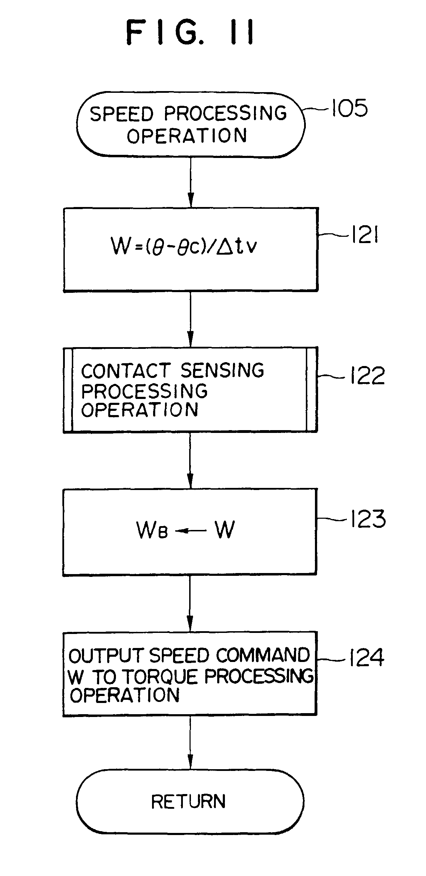

Fig. 11 shows the speed processing operation 105 in detail. In step 121, the speed command W is first calculated. Here, data $\theta$, which is a position command written in the dual-port RAM 29 by the CPU-A 21, corresponds to the signal 54 in Fig. 7, data $\theta_C$ is read out in step 111 in the torque processing operation, and $\Delta t_V$ is a period of time of the speed processing operation.

Next, the contact sensing processing operation 122 is performed, which will be described later. In step 123, the speed command W is written in $W_B$, which is the speed command in the previous cycle and used in step 122. Finally, in step 124, W is output to the torque processing operation 114.

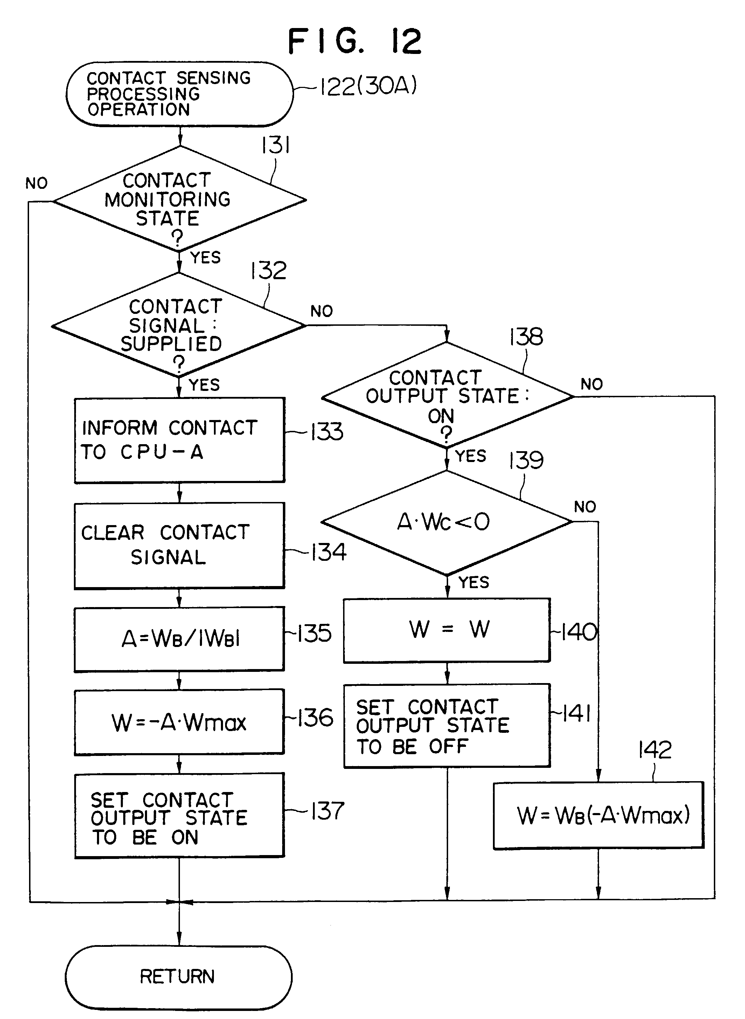

Fig. 12 shows the contact sensing processing operation 122 which corresponds to the operation of the contact processing section 30A in Fig. 7.

In step 131, it is determined whether or not the contact monitoring state is set. This state is set by the CPU-A 21 for the contact sensing operation. When the contact monitoring state is not set, the contact sensing processing operation is completed. When the contact monitoring state is set, it is determined in step 132 whether or not the contact signal is supplied to the sensor interface-B 33. When the signal is supplied to the interface-B 33, the contact of the wire with the work is informed to the CPU-A 21 in step 133. This is achieved by writing data representing the contact signal in the dual-port RAM 29 by the CPU-B 31. In step 134, the contact signal is cleared. In this manner, the operations from step 133 to step 137 are performed once when the contact is sensed.

In step 135, the sensing operation direction for each axis is stored. $W_B$ is a value commanded by the previous cycle speed command in step 123. Data A includes components for six axes and each component has "+1" or "-1" in accordance with a rotating direction of a corresponding axis. In step 136, the speed command is replaced by a maximum allowable value ($W_{MAX}$) in a direction (-A) opposite to the contact sensing operation direction.

The above steps are briefly described but in order to keep a ratio of speed values for axes, the following operations are performed:

$$\vec{W} = (W_1, W_2, W_3, W_4, W_5, W_6) \tag{6}$$

$$W_x = \max (|W_i|) \ (i = 1 \text{ to } 6) \tag{7}$$

$$\vec{W} = -A \cdot (W_{MAXX}/W_X) \cdot \vec{W} \tag{8}$$

where $W_{MAXX}$ is a maximum speed value for x-th axis and the maximum speed value $W_{MAX}$ is assigned to a greatest speed component.

Next, in order to keep this state, a contact output state is set to be ON in step 137. The processing operations from step 133 to step 137 are performed at the time $t_0$ in Figs. 8A, 8B and 8C and represents the maximum deceleration command to the motors, as apparent from the limiter processing operation of the torque processing operation.

When it is determined in step 132 that the contact signal is not received, whether or not the contact output state is set is determined in step 138. When the state is set to be ON, it is determined in step 139 whether or not deceleration processing operation is completed. Here, data A represents the contact sensing operation direction, and $W_C$ represents the current speed value. That is, it is checked whether or not the current speed value is substantially zero or whether or not the direction of the current speed is opposite to the contact sensing operation direction. In step 139, answer "Yes" is obtained when all the components for six axes satisfy the above relation.

When it is determined in step 139 that the deceleration processing operation is not completed, the speed command W is rewritten by the previous cycle speed command $W_B$ ($= -A \cdot W_{MAX}$) in step 142. As a result, the maximum speed command is kept from the time $t_0$ to the time $t_1$ in Figs. 8A, 8B and 8C in an opposite direction to the contact sensing operation direction.

When it is determined in step 139 that the deceleration processing operation is completed, the speed command W calculated in the speed processing operation is remained output in step 140. Subsequently, in step 141 the contact output state is set to be OFF. Therefore, the processing operations in steps 140 to 141 are performed at the time $t_1$ in Figs. 8A, 8B and 8C.

When it is determined in step 138 that the contact output state is not set to be ON, the processing operation is immediately completed.

By performing the above processing operations, the maximum deceleration processing operation can be performed immediately when the wire contacts with the work, so that the inertially moving robot can be stopped at a shorter distance than usual. In this embodiment, since the robot can be stopped at the short distance even if the contact sensing operation speed value is great, the contact sensing operation speed value can be increased, and thereby decreasing the sensing operation time.

In addition, the torque command is subjected to the limiter processing operation. Therefore, the motor and the like can be protected.

Further, since the current value for sensing the contact is limited, the safety can be obtained without decreasing the sensitivity.

Note that the special processing operation for stopping the robot upon the contact of the wire with the work is included in the processing operation for calculating the speed command in this embodiment. However, the special processing operation can be included in another processing operation and the present invention, therefore, is not limited due to a portion where the special processing operation is included.

In addition, the special processing operation can be realized regardless of a system of a sensor for sensing the contact. For example, a light switch for sensing the contact by cutting off a light path may be used. As should be apparent, the present invention can be realized regardless of the system of the sensing means if the contact can be sensed by the sensing means.

According to the present invention, a distance of the movable member inertially moving from a position when the contact with portions of the work to be worked is sensed by a contact sensor to a position when the movable member is stopped can be kept short. Therefore, the time required for sensing the contact can be sufficiently short by increasing the sensing operation speed. When the present invention is applied to the automatic welding apparatus utilizing the industrial robot, the job efficiency can be easily increased at low cost. For example, in one example to which the present invention is applied, the sensing operation less than 1/5 of that in a conventional technique can be easily obtained.

**Claims**

1. A method of controlling positioning of a movable member, comprising

   a first step of moving said movable member toward a work object, and

   a second step of sensing that said movable member contacts with said work object,

   a third step of applying acceleration to said movable member in a direction opposite to a moving direction of said movable member in said first step when it is sensed that said movable member contacts with said work object, said third step further comprising a step of sensing that a speed of said movable member is substantially 0 or negative and stopping applying the acceleration to said movable member.

2. A method according to claim 1, further comprising the steps of

   generating a position of said work object as a position command when it is sensed that said movable member contacts with said work object; and

stopping said movable member at a position commanded by the position command when it is sensed that the speed of said movable member is substantially 0 or negative.

3. A method according to claim 1, wherein said movable member has a contact segment for sensing contact with said work object.

4. A method according to claim 3, characterized in that said movable member is a hand for supporting a welding torch and said contact segment is a welding wire delivered from said welding torch.

5. An apparatus for controlling a position of a movable member, comprising:

a movable member (9);

driving means (39, 40) for driving said movable member (9); and

control means (20, 30) for controlling said driving means (39, 40),

wherein said control means (20, 30) comprises first control means (20) for correcting a position of said movable member (9) by sensing a position of a work object (11) with respect to a reference position from contact of said movable member (9) with said work object (11), and second control means (30) for controlling said driving means (39, 40) such that acceleration in a direction opposite to a moving direction of said movable member is applied to said movable member (9), when the contact is sensed.

6. An apparatus according to claim 5, wherein said movable member (9) includes a contact segment (90) for sensing the contact with said work object (11).

7. An apparatus according to claim 6, wherein said movable member (9) is a hand (150) for supporting a welding torch (9) and said contact segment is a welding wire (90) delivered from said welding torch (9).

**Patentansprüche**

1. Verfahren zur Steuerung der Positionierung eines beweglichen Bauteils mit

einem ersten Schritt des Bewegens des beweglichen Bauteils auf ein Werkstück zu, und

einem zweiten Schritt des Erfassens, daß das bewegliche Bauteil das Werkstück berührt,

einem dritten Schritt des Beschleunigens des beweglichen Bauteils in eine Richtung entgegengesetzt einer Bewegungsrichtung des beweglichen Bauteils im ersten Schritt, wenn erfaßt wird, daß das bewegliche Bauteil das Werkstück berührt, wobei der dritte Schritt außerdem einen Schritt aufweist, in dem erfaßt wird, daß eine Geschwindigkeit des beweglichen Bauteils in etwa 0 oder negativ ist und in dem die Beschleunigung des beweglichen Bauteiles unterbunden wird.

2. Verfahren nach Anspruch 1, mit den weiteren Schritten

Erzeugen einer Position des Werkstücks als Positionsbefehl, wenn erfaßt wird, daß das bewegliche Bauteil das Werkstück berührt, und

Stoppen des beweglichen Bauteils an einer durch den Positionsbefehl angegebenen Position, wenn erfaßt wird, daß die Geschwindigkeit des beweglichen Bauteils in etwa 0 oder negativ ist.

3. Verfahren nach Anspruch 1, bei dem das bewegliche Bauteil ein Kontaktsegment zur Erfassung der Berührung des Werkstücks hat.

4. Verfahren nach Anspruch 3, dadurch gekennzeichnet, daß das bewegliche Bauteil eine Hand zum Halten einer Schweißeinrichtung ist, und daß das Kontaktsegment ein Schweißdraht ist, der von der Schweißeinrichtung zugeführt wird.

5. Vorrichtung zur Steuerung einer Position eines beweglichen Bauteils, mit

einem beweglichen Bauteil (9);

einer Antriebseinrichtung (39, 40) zum Antreiben des beweglichen Bauteils (9); und

einer Steuerungseinrichtung (20, 30) zum Steuern der Antriebseinrichtung (39, 40),

wobei die Steuerungseinrichtung (20, 30) eine erste Steuerungseinrichtung (20) aufweist zum Korrigieren einer Position des beweglichen Bauteils (9), indem eine Position eines Werkstücks (11) bezüglich einer Referenzposition anhand der Berührung des Werkstücks (11) durch das bewegliche Bauteil (9) erfaßt wird, und eine zweite Steuerungseinrichtung (30) zum Steuern der Antriebseinrichtung (39, 40) derart, daß das bewegliche Bauteil (9) dann, wenn die Berührung erfaßt wird, in eine Richtung entgegengesetzt einer Bewegungsrichtung des beweglichen Bauteils beschleunigt wird.

6. Vorrichtung nach Anspruch 5, bei der das bewegliche Bauteil (9) ein Kontaktsegment (90) aufweist, um die Berührung des Werkstücks (11) zu erfassen.

7. Vorrichtung nach Anspruch 6, bei der das bewegliche Bauteil (9) eine Hand (150) zum Halten einer Schweißeinrichtung (9) ist, und bei der das Kontaktsegment ein Schweißdraht (90) ist, der von der Schweißeinrichtung (9) zugeführt wird.

**Revendications**

1. Procédé de réglage du positionnement d'un organe mobile, comprenant

   une première étape de déplacement de l'organe mobile vers une pièce,
   une seconde étape de détection du fait que l'organe mobile est au contact de la pièce, et
   une troisième étape d'application d'une accélération à l'organe mobile en sens opposé au sens de déplacement de l'organe mobile dans la première étape lorsqu'il est détecté que l'organe mobile est au contact de la pièce, la troisième étape comprenant en outre une étape de détection du fait qu'une vitesse de l'organe mobile est pratiquement nulle ou négative et d'arrêt de l'application d'une accélération à l'organe mobile.

2. Procédé selon la revendication 1, comprenant en outre les étapes suivantes :

   la création d'une position de la pièce comme commande de position lorsque le fait que l'organe mobile est au contact de la pièce est détecté, et
   l'arrêt de l'organe mobile à une position commandée par la commande de position lorsque le fait que la vitesse de l'organe mobile est pratiquement nulle ou négative est détecté.

3. Procédé selon la revendication 1, dans lequel l'organe mobile comporte un segment de contact destiné à détecter le contact avec la pièce.

4. Procédé selon la revendication 3, caractérisé en ce que l'organe mobile est une main de support d'un chalumeau de soudage, et le segment de contact est un fil de soudage avançant à partir du chalumeau de soudage.

5. Appareil de réglage d'une position d'un organe mobile, comprenant :

   un organe mobile (9),
   un dispositif (39, 40) d'entraînement de l'organe mobile (9), et
   un dispositif (20, 30) de commande du dispositif d'entraînement (39, 40), et
   dans lequel le dispositif de commande (20, 30) comporte un premier dispositif (20) de commande destiné à corriger la position de l'organe mobile (9) par détection d'une position d'une pièce (11) par rapport à une position de référence par contact de l'organe mobile (9) avec la pièce (11), et un second dispositif (30) de commande du dispositif d'entraînement (39, 40) de manière que l'accélération en sens opposé au sens de déplacement de l'organe mobile soit appliquée à l'organe mobile (9) lorsque le contact est détecté.

6. Appareil selon la revendication 5, dans lequel l'organe mobile (9) comporte un segment (90) de contact destiné à détecter le contact avec la pièce (11).

7. Appareil selon la revendication 6, dans lequel l'organe mobile (9) est une main (150) de support d'un chalumeau de soudage (9), et le segment de contact est un fil de soudage (90) qui avance à partir du chalumeau de soudage (9) .

# F I G. I

EP 0 386 791 B1

# FIG. 2A

# FIG. 2B

# FIG. 2C

# F I G. 3

# F I G. 4

# F I G. 5

FROM SENSOR i/F-A 26

TO SENSOR i/F-B 33

AC GENERATOR

CURRENT SENSOR

47

48

46

3

9

90

10

11

$C_1$

2

# F I G. 6

# FIG. 7

SERVO CPU SECTION

EP 0 386 791 B1

# F I G. 8A

# F I G. 8B

# F I G. 8C

# FIG. 9

TIMER INTERRUPT
PROCESSING —— 100

↓

INCREMENT
TIME COUNTER —— 101

↓

TORQUE
PROCESSING
PERIOD
? —— 102

NO →

YES ↓

TORQUE PROCESSING
OPERATION —— 103

↓

SPEED
PROCESSING
PERIOD
? —— 104

NO →

YES ↓

SPEED PROCESSING
OPERATION —— 105

↓

RETURN

# FIG. 10

TORQUE PROCESSING OPERATION — 103

READ CURRENT VALUE $\theta c$ FROM COUNTER — 111

$Wc = (\theta c - \theta cB)/\Delta t_T$ — 112

$\theta cB \leftarrow \theta c$ — 113

$T = (W - Wc)/\Delta t_T$ — 114

115

$T < Tmax$ — NO → $T \leftarrow Tmax$ — 116

YES

117

$T > -Tmax$ — NO → $T \leftarrow -Tmax$ — 118

YES

OUTPUT TORQUE COMMAND T TO D/A CONVERTER — 119

RETURN

# FIG. 11

$$
\boxed{\text{SPEED PROCESSING OPERATION}} \sim 105
$$

$$
\boxed{W = (\theta - \theta c)/\Delta t v} \sim 121
$$

$$
\boxed{\text{CONTACT SENSING PROCESSING OPERATION}} \sim 122
$$

$$
\boxed{W_B \leftarrow W} \sim 123
$$

$$
\boxed{\text{OUTPUT SPEED COMMAND W TO TORQUE PROCESSING OPERATION}} \sim 124
$$

$$
\boxed{\text{RETURN}}
$$

EP 0 386 791 B1

# FIG. 12

CONTACT SENSING PROCESSING OPERATION — 122(30A)

131 CONTACT MONITORING STATE ?
- NO →
- YES ↓

132 CONTACT SIGNAL : SUPPLIED ?
- NO →
- YES ↓

INFORM CONTACT TO CPU–A — 133

CLEAR CONTACT SIGNAL — 134

$A = W_B / |W_B|$ — 135

$W = -A \cdot W_{max}$ — 136

SET CONTACT OUTPUT STATE TO BE ON — 137

138 CONTACT OUTPUT STATE : ON ?
- NO →
- YES ↓

139 $A \cdot W_c < 0$
- NO →
- YES ↓

$W = W$ — 140

SET CONTACT OUTPUT STATE TO BE OFF — 141

$W = W_B(-A \cdot W_{max})$ — 142

RETURN